# EUROPÄISCHE PATENTSCHRIFT

(11) **EP 2 601 026 B1**
(45) Veröffentlichungstag und Bekanntmachung des Hinweises auf die Patenterteilung: **04.03.2020**
(21) Anmeldenummer: 11743027.2
(22) Anmeldetag: 02.08.2011
(51) Int. Cl.: B29B 11/14, B29B 11/08, B29C 45/16, B29C 49/06, B29C 49/22, B29K 105/00, B29K 105/26, B29K 77/00, B29K 67/00

(54) **VERFAHREN UND VORRICHTUNG ZU HERSTELLUNG VON KUNSTSTOFFVORFORMLINGEN FÜR GROSSVOLUMIGE BEHÄLTER**
PROCESS AND DEVICE FOR PRODUCING PLASTIC PARISONS FOR LARGE-VOLUME CONTAINERS
PROCÉDÉ ET DISPOSITIF POUR LA FABRICATION D'ÉBAUCHES EN MATIÈRE PLASTIQUE POUR DES CONTENEURS DE GRAND VOLUME

(30) Priorität: 04.08.2010 DE 102010033391
(43) Veröffentlichungstag der Anmeldung: 12.06.2013
(73) Patentinhaber: KraussMaffei Technologies GmbH, 80997 München (DE)
(72) Erfinder: MITZLER, Jochen, 85221 Dachau (DE)
(74) Vertreter: Wilhelm, Ludwig
(86) Internationale Anmeldenummer: PCT/EP2011/003864
(87) Internationale Veröffentlichungsnummer: WO 2012/016679

(56) Entgegenhaltungen:
- GB-A- 2 152 428
- US-A- 4 413 974
- US-A1- 2008 258 356

## Beschreibung

Die Erfindung betrifft ein Verfahren zur Herstellung eines Kunststoff-Vorformlings (Preform) für aufblasbare großvolumige Behälter, insbesondere eines Behälters mit einem Fassungsvermögen von mindestens 3 Liter bzw. mindestens 1 Gallone, vorzugsweise mindestens 15 Liter bzw. mindestens 5 Gallonen, wobei der Kunststoff-Vorformling einen Verschluss-Bereich und einen aufblasbaren Hohlkörper-Bereich aufweist. Insbesondere betrifft die Erfindung die Herstellung eines dickwandigen Kunststoff-Vorformlings (Preform) für 5-Gallonen-Wasserflaschen oder vergleichbare dickwandige Kunststoff-Vorformlinge. Sie ist auch vorsehbar für Behälter mit einem noch größeren Volumen im aufgeblasenen Zustand. Weiterhin betrifft die Erfindung eine Spritzgießmaschine zur Durchführung des Verfahrens..

Bei der Herstellung von Kunststoffbehältern ist es bekannt, in einem ersten Schritt zunächst einen Kunststoff-Vorformling, auch Preform genannt, mittels eines Spritzgießvorgangs herzustellen, und den Kunststoff-Vorformling in einem nachfolgenden Schritt in einer Blasformmaschine zu dem fertigen Kunststoffbehälter aufzublasen. Die Verfahrensschritte des Spritzgießens und des Blasformens können in einer Maschine integriert sein. In diesem Fall spricht man vom einstufigen Spritz-Streckblasformen. Insbesondere für Produktionen mit hohen Ausstoßleistungen wird jedoch ein zweistufiger Prozess bevorzugt, bei dem die Kunststoff-Vorformlinge (Preforms) in einer Spritzgießmaschine hergestellt werden, und zu einem späteren Zeitpunkt werden diese Kunststoff-Vorformlinge auf einer separaten Blasformmaschine zu dem fertigen Kunststoffbehälter aufgeblasen. In diesem Fall spricht man vom zweistufigen Spritz-Streckblasformen.

Aus der US6352426B1 ist es bekannt, mittels einer Mehrkomponenten-Spritzgießmaschine mit Drehtellertechnik mehrschichtige PET-Preforms herzustellen, wobei in einem ersten Schritt der eigentliche PET-Preform hergestellt und dieser nachfolgend mit einer oder mehreren Barriereschichten überzogen wird. Die Wandstärke des endgültigen Preforms wird im wesentlichen durch die Wandstärke des im ersten Schritt hergestellten PET-Preforms bestimmt. Die Schichtdicken der Barriereschichten machen nur einen Bruchteil der Schichtdicke des zuerst hergestellten PET-Preforms aus.

Aus der EP0688651A1 ist die Herstellung von Preforms bekannt, die aus einer ersten Schicht eines ersten Materials und einer zweiten Schicht eines zweiten Materials bestehen. Hierbei kommt ebenfalls eine Mehrkomponenten-Spritzgießmaschine mit Drehtellertechnik zum Einsatz. Weitergehende Einzelheiten hinsichtlich der verwendeten Materialien und der Schichtdicken sind in dieser Druckschrift nicht genannt.

Die WO03/055663A1 offenbart die Herstellung von Preforms, wobei sich zwei Formhälften quer zur Längsachse des Preforms auf- und zufahren lassen, so dass im zugefahrenen Zustand der beiden Formhälften eine Kavität für einen Preform gebildet wird.

Aus dem Dokument US 4 413 974 ist ein Verfahren zur Herstellung eines aufblasbaren Kunststoffbehälters bekannt, wobei in einem ersten Spritzschritt ein erster Kunststoff-Vorformling hergestellt wird, der eine erste Schicht darstellt. Diese erste Schicht wird in einem nächsten Schritt axial gestreckt, wobei aus der ersten Schicht eine andere, zweite Schicht gebildet wird. An diese andere, zweite Schicht wird in einem nächsten Spritzschritt ein weiteres Kunststoffmaterial angespritzt, so dass ein zweischichtiger, gestreckter Kunststoff-Vorformling vorliegt, der nachfolgend zu einem fertigen Kunststoffbehälter aufgeblasen wird.

Darüberhinaus sind Preforms von beträchtlichen Ausmassen bekannt, die speziell für das Streckblasen von großvolumigen Kunststoffbehältern benötigt werden. Beispielsweise sind dickwandige PET-Preforms für die Herstellung von 5-Gallonen-Wasserbehälter bekannt. Diese PET-Preforms haben eine Masse von etwa 400g - 750g, eine Wandstärke von etwa 8 bis 10 mm, und weisen eine Länge von etwa 400mm auf.

Im Gegensatz dazu weisen Preforms für übliche im Handel erhältliche Getränkeflaschen mit einem Fassungsvermögen von 1 - 2 Liter deutlich geringere Abmessungen auf.

Ausgehend von dem vorgenannten Stand der Technik liegt der Erfindung die Aufgabe zugrunde, ein Verfahren zur Herstellung eines Kunststoff-Vorformlings, d.h. einen Preform, anzugeben, der speziell für die Herstellung von Kunststoffbehältern mit einem großen Fassungsvermögen geeignet ist, und der mit einer vergleichweise kurzen Zykluszeit hergestellt werden kann. Weiterhin liegt der Erfindung die Aufgabe zugrunde, eine Vorrichtung zur Herstellung dieses Kunststoff-Vorformlings anzugeben.

Die Lösung der zuerst genannten Aufgabe erfolgt durch ein Verfahren mit den Merkmalen von Anspruch 1. Hinsichtlich der Vorrichtung ist eine Lösung in Anspruch 10 angegeben. Vorteilhafte Ausgestaltungen und Weiterentwicklungen finden sich in den Unteransprüchen.

Dadurch, dass der Kunststoff-Vorformling, zumindest der aufblasbare Hohlkörper-Bereich des Kunststoff-Vorformlings, aus mehreren Schichten zusammengesetzt ist, , wobei sich die Schichtdicken (d1, d2, d3,...) der einzelnen Schichten (1a, 1b, 1c,...) lediglich unter Berücksichtigung der Abkühlrate der jeweiligen Schicht (1a, 1b, 1c,...) derart geringfügig voneinander unterscheiden, dass für jede der Schichten eine im wesentlichen gleiche Zykluszeit für deren Herstellung bzw. Ausformung gegeben ist, kann ein dickwandiger Kunststoff-Vorformling mittels der Mehrkomponenten-Spritzgießtechnik mit einer vergleichsweisen kurzen Zykluszeit hergestellt werden. Dies soll an folgendem Beispiel erläutert werden. Es sei angenommen, dass die Wandstärke des dickwandigen Preforms in dem Hohlkörper-Bereich 9 mm beträgt. Die Zykluszeit für die Herstellung in einem Formwerkzeug mit einer Kavität für diesen dickwandigen Preform liegt bei etwa 120 Sekunden. Wenn der gleiche Preform aus drei Schichten mit im Wesentlichen gleicher Schichtdicke aufgebaut ist bzw. wird, kann die Zykluszeit auf etwa 20 Sekunden reduziert werden, weil jede Schicht nur etwa 3 mm dick ist. Es ergeben sich lediglich geringfügige Unterschiede in den einzelnen Schichtdicken, bedingt durch die Abkühlrate der jeweiligen Schicht.

Dickwandige Preforms haben Schichtdicken von mindestens etwa 8 - 10 mm, wobei die einzelnen Schichten mindestens 2mm, vorzugsweise mindestens 3mm dick sind, mit einer Masse von mindestens 300g, insbesondere von mindestens 400g. Dabei kann es sich um einen Kunststoff-Vorformling für einen 5-Gallonen-Wasserbehälter handeln. Grundsätzlich kommen aber auch dickwandige Preforms für andere großvolumige Behälter in Betracht. Andere großvolumige Behälter können beispielsweise zur Befüllung mit Wein oder mit Kosmetika vorgesehen und verwendet werden. Grundsätzlich können derartige großvolumige Behälter für alle Arten von flüssigen und gegebenenfalls auch pastösen Materialien vorgesehen werden. Der wesentliche erfindungsgemäße Gedanke besteht also darin, den dickwandigen Preform gedanklich in mehrere Schichten aufzuteilen und für jede dieser Schichten einen Spritzgießschritt in einem Mehrkomponenten-Spritzgießverfahren vorzusehen. Die Schichtdicken (d1, d2, d3,...) der einzelnen Schichten (1a, 1b, 1c,...) unterscheiden sich lediglich unter Berücksichtigung der Abkühlrate der jeweiligen Schicht (1a, 1b, 1c,...) derart geringfügig voneinander, dass für jede der Schichten eine im Wesentlichen gleiche Zykluszeit für deren Herstellung bzw. Ausformung gegeben ist. Daher können gleichzeitig in verschiedenen Kavitäten verschiedene Schichten hergestellt und an die jeweils im vorangegangenen Schritt geformten Schichten angespritzt bzw. angeformt werden, wobei für jede Schicht im wesentlichen die gleiche Zeit benötigt wird.

Je nach den Anforderungen an den fertigen Kunststoff-Behälter können die Schichten im einfachsten Fall aus dem gleichen Kunststoffmaterial M bestehen. Falls erforderlich, können aber auch unterschiedliche Materialien für die einzelnen Schichten vorgesehen werden. Beispielsweise kann die innerste Schicht aus einem Neumaterial Mₙ bestehen und die weiteren Schichten können aus recyceltem Material Mᵣ bestehen. Auf diese Weise wird nur eine vergleichsweise geringe Menge an Neumaterial Mₙ benötigt, die in Kontakt mit dem Inhalt des Kunststoffbehälters steht und für die weiteren Schichten kann preiswertes Recyclat (Mᵣ) zum Einsatz kommen.

Je dicker der dickwandige Kunststoff-Vorformling ist, d.h. je höher die Wandstärke, um so eher ist es ratsam, wenn dieser Kunststoff-Vorformling aus drei und mehr Schichten zusammengesetzt ist. Die einzelnen Schichtdicken können sich unter Berücksichtigung der Abkühlraten und der Wärmeleitfähigkeit der verwendeten Kunststoffmaterialien geringfügig voneinander unterscheiden, um jeweils auf die gleiche Zeit für die Herstellung der Schicht zu kommen. Insbesondere sollen die Unterschiede nicht mehr als 20%, vorzugsweise nicht mehr als 10% betragen. Vorzugsweise soll dabei für die von innen nach außen aufeinander folgenden einzelnen Schichten hinsichtlich deren Schichtdicken d₁, d₂, d₃, d₄ und so fort die folgende Beziehung gelten: d₁ > d₂ ≥ d₃ ≥ d₄ ...Hierbei kommt der Gedanke zum Tragen, dass die erste, innere Schicht von innen und außen aktiv gekühlt wird, d.h. das zuerst gespritzte Kunststoffmaterial steht innen und außen in direktem Kontakt mit dem gekühlten Formwerkzeug. Im Unterschied dazu wirkt bei den nachfolgenden Schichten nur die äußere Kühlung direkt auf das frische Kunststoffmaterial während die innenliegende Kühlung durch die vorher hergestellten Schichten hindurch wirken muss. Zur Optimierung der Zykluszeit kann dieser Effekt insoweit berücksichtigt werden, als die Schichtdicken von innen nach außen nicht zahlenmäßig exakt gleich dick sind, sondern die vorerwähnten geringfügigen Unterschiede aufweisen können.

Eine geeignete Spritzgießmaschine zur Herstellung eines Kunststoff-Vorformlings (Preform) verfügt über wenigstens eine Plastifizier- und Einspritzeinheit und eine mit Drehteller oder mit Indexplatte ausgestattete Schließeinheit. Dabei sind Teile eines Formwerkzeugs dem Drehteller oder der Indexplatte zugeordnet und diese Teile können mit weiteren Teilen des Formwerkzeugs zusammengebracht und Kavitäten unterschiedlicher Gestalt und Größe gebildet werden. Mit dem Drehteller oder mit der Indexplatte können mehrere Stationen angefahren werden, wobei in verschiedenen Stationen Kavitäten unterschiedlicher Gestalt und Größe entsprechend der jeweils herzustellenden Schicht des Kunststoff-Vorformlings gebildet werden können. Diese Kavitäten mit der unterschiedlichen Gestalt und Größe sind zur Formung von unterschiedlichen Schichten des Kunststoff-Vorformlings von jeweils im wesentlichen gleicher Schichtdicke ausgebildet. Ferner ist eine Plastifizier- und Einspritzeinheit zur gleichzeitigen Befüllung von mindestens zwei, vorzugsweise mindestens drei Kavitäten mit jeweils unterschiedlicher Gestalt und Größe vorgesehen. Dabei kommt ein Schmelzeverteilersystem zum Einsatz, das zwischen dieser Plastifizier- und Einspritzeinheit und den vorgenannten Kavitäten angeordnet ist. Auf diese Weise können mit ein und derselben Plastifizier- und Einspritzeinheit mehrere Schichten des Preforms im Wesentlichen gleichzeitig hergestellt werden. Dies ergibt eine deutliche Reduzierung der Zykluszeit, denn nun kann nach jedem Spritzschritt ein fertiger dickwandiger Preform ausgeworfen oder entnommen werden.

Gegebenenfalls kann zusätzlich eine weitere Plastifizier- und Einspritzeinheit zur Herstellung von einer oder mehreren Schichten des Kunststoff-Vorformlings vorgesehen sein. Insbesondere kann diese zusätzliche Plastifizier- und Einspritzeinheit zur Herstellung der innersten Schicht vorgesehen sein. In diesem Fall würde das Schmelzeverteilersystem zwischen der ersten Plastifizier- und Einspritzeinheit und den Kavitäten für die weiteren Schichten angeordnet sein. Auf diese Weise kann für die innerste Schicht ein Neumaterial Mₙ und für die weiteren Schichten recyceltes Material Mᵣ verwendet werden. Im Bedarfsfall kann auch ein Schmelzeverteilersystem für die zusätzliche Plastifizer- und Einspritzeinheit vorgesehen werden, um mehrere verschiedene Schichten des Preforms gleichzeitig herstellen zu können sollen.

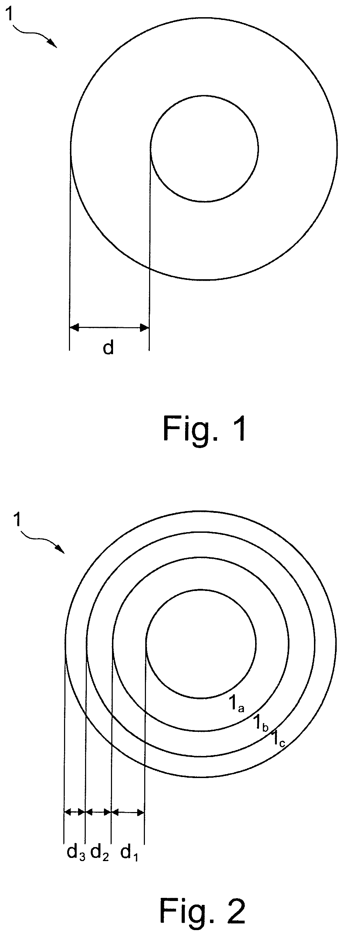

Nachfolgend soll die Erfindung anhand eines Ausführungsbeispiels und unter Bezugnahme auf die Figuren 1 bis 4 näher beschrieben werden.

Die Figur 1 zeigt schematisch einen Querschnitt durch den Hohlkörperbereich eines dickwandigen Preforms 1, der zum Beispiel eine Wandstärke d = 9 mm aufweisen kann. Es handelt sich um eine typische Wandstärke eines Preforms zur Herstellung von 5-Gallonen-Wasserbehälter. Erfindungsgemäß wird dieser Preform 1 gedanklich in mehrere Schichten 1a, 1b, 1c von im Wesentlichen gleicher Schichtdicke d1 = d2 = d3 aufgeteilt, wie dies in der Figur 2 gezeigt ist. Bei einer Wandstärke d = 9mm würde also jede Schicht 3 mm dick sein. Die Mehrschichtigkeit kann für den ganzen Preform oder nur für den Hohlkörperbereich gelten. Damit für die einzelnen Schichten eine im Wesentlichen gleiche Zykluszeit für deren Herstellung bzw. Abformung gegeben ist, liegen geringfügige Unterschiede in den Schichtdicken vor, wobei in der Regel die Schichtdicken von innen nach außen abnehmen: d1 > d2 > d3 >...

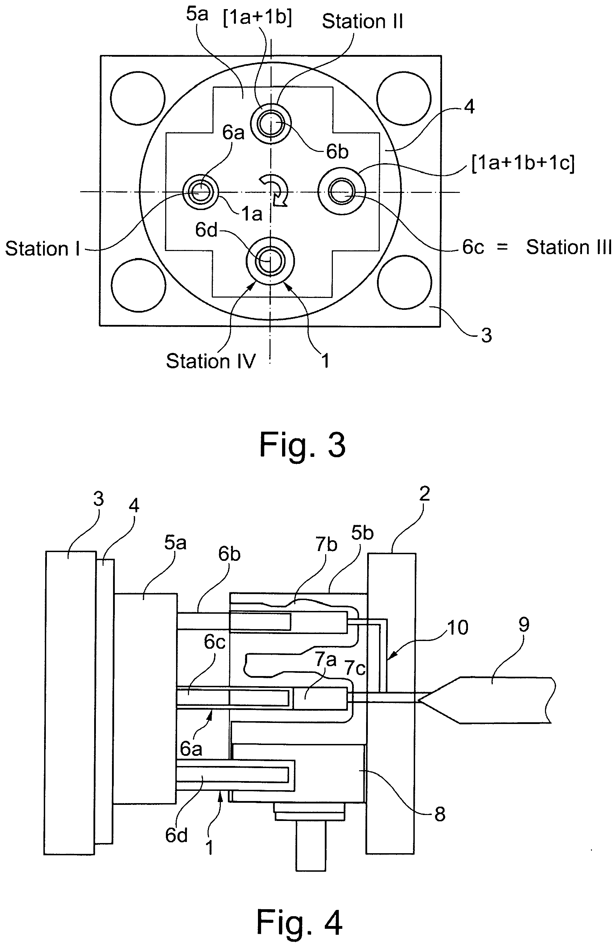

Die Figuren 3 und 4 zeigen schematisch eine Spritzgießmaschine mit Drehtellertechnik, wie sie für sich genommen aus dem Mehrkomponenten-Spritzgießen bekannt ist, wobei die Figur 3 eine Draufsicht auf die bewegliche Formaufspannplatte 3 mit dem Drehteller 4 zeigt und die Figur 4 eine Seitenansicht. Die Schließeinheit verfügt über eine feststehende Formaufspannplatte 2, eine bewegliche Formaufspannplatte 3 sowie einen Drehteller 4 auf der beweglichen Formaufspannplatte 3. Ein Formwerkzeug zur Herstellung eines Preforms 1 umfasst eine bewegliche Formhäflte 5a mit vier Kernen 6a, 6b, 6c und 6d und sowie eine feststehende Formhälfte 5b. In der feststehenden Formhälfte 5b sind drei verschiedene Vertiefungen 7a, 7b und 7c vorgesehen sowie eine Station 8 zum Kühlen der fertigen Preforms. Die Vertiefungen 7a und 7c liegen in einer Ebene und daher in Blickrichtung hintereinander. Wenn die Kerne 6a bis 6c in die zugehörigen Vertiefungen 7a bis 7c eingefahren und das Formwerkzeug 5 geschlossen ist, kommt es zur Ausbildung von drei verschiedenen Kavitäten bzw. von drei Kavitäten unterschiedlicher Gestalt und Größe entsprechend der jeweils herzustellenden Schicht des Kunststoff-Vorformlings 1. In der Station I wird zwischen dem Kern 6a und der Vertiefung 7a die Kavität für die erste, innerste Schicht 1a des Preforms gebildet, in der Station II zwischen dem Kern 6b und der Vertiefung 7b die Kavität für die zweite Schicht 1b und in der Station III zwischen dem Kern 6c und der Vertiefung 7c die Kavität für die dritte Schicht 1c. Der Durchmesser der Vertiefungen 7a bis 7c wird sukzessive größer. Mit dem in diese Vertiefungen eingefahrenen Kern sowie den darauf ausgebildeten Schichten "wandert" die Kavität von der Station I bis zur Station II von innen nach außen. Es werden somit in den verschiedenen Stationen I, II und III Kavitäten unterschiedlicher Gestalt und Größe entsprechend der jeweils herzustellenden Schicht des Kunststoff-Vorformlings gebildet, wobei diese Kavitäten mit der unterschiedlichen Gestalt und Größe zur Formung der unterschiedlichen Schichten des Kunststoff-Vorformlings von jeweils im wesentlichen gleicher Schichtdicke ausgebildet sind, nämlich zur Formung der ersten Schicht (1a) in der Station I, der zweiten Schicht (1b) in der Station II und dritten Schicht (1c) in der Station III. In der Station IV befindet sich der Kern 6d mit dem fertig gespritzten Kunststoff-Vorformling 1 mit allen drei übereinander und aneinander gespritzten Schichten d1 - d3 und kann in einer Kühlstation 8 auf eine passende Entformtemperatur heruntergekühlt werden.

Nach Entnahme des fertigen Preforms 1 von dem Kern 6d kann der Drehteller um 90° weitergetaktet und das Formwerkzeug erneut zugefahren werden. Danach befindet sich der nunmehr freie Kern 6d in der Vertiefung 7a, der Kern 6a mit der ersten Schicht 1a in der Vertiefung 7b, der Kern 6b mit den Schichten 1a+1b in der Vertiefung 7c und der Kern 6c mit den Schichten 1a+1b+1c in der Kühlstation 8. Nun kann mittels der hier nur angedeuteten Plastifizier- und Einspritzeinheit 9 sowie einem geeigneten Schmelzeverteiler 10 erneut Kunststoffmaterial M in die Kavitäten in den Stationen I, II und III eingespritzt und diese Kavitäten simultan befüllt werden. Nach der erforderlichen Abkühlzeit kann das Formwerkzeug 5 wieder aufgefahren, der fertige Preform 1 von dem Kern 6c entnommen und der Drehteller erneut um 90° weitergetaktet werden. Die vorgenannten Schritte werden sukzessive wiederholt, so dass die Kerne 6a - 6d mit dem jeweils darauf befindlichen Teil des Preforms 1 jeweils um 90° weitergetaktet werden, bis ein fertiger Preform 1 in der Station IV entnommen werden kann. Durch die simultane Befüllung der Kavitäten in den Stationen I, II und III mit dem gleichen Material M kann an der Station IV nach jedem Spritzschritt, d.h. nach jedem Schuss, ein fertiger dickwandiger Preform 1 aus dem Material M entnommen werden.

In einer weiteren hier nicht dargestellten Ausführungsform kann eine zusätzliche Plastifizier- und Einspritzeinheit vorgesehen werden, um die erste innere Schicht 1a mit einem ersten Material, z.B. Neumaterial Mₙ, herzustellen. Die Plastifizier- und Einspritzeinheit 9 mit dem Schmelzeverteiler 10 dient dann nur noch zur Herstellung der nachfolgenden Schichten 1b und 1c mit einem anderen Material, z.B. Recyclatware Mᵣ.

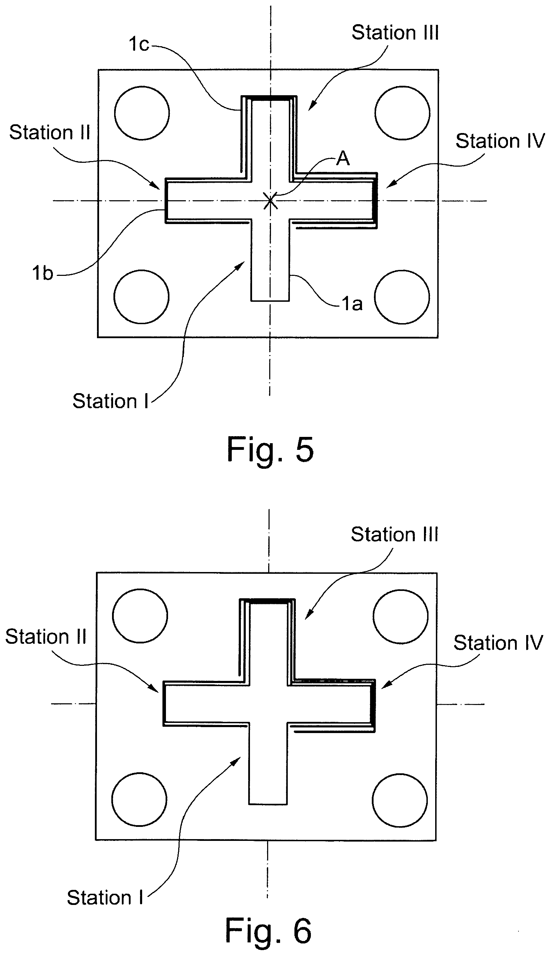

Anstelle der hier beschriebenen Drehtellertechnik kann auch die sogenannte Indexplattentechnik angewandt werden, um die Kavitäten unterschiedlicher Gestalt und Größe entsprechend der jeweils herzustellenden Schicht des Kunststoff-Vorformlings zu bilden. Die Figur 5 zeigt schematisch die Indexplattentechnik für die Herstellung eines PET-Preforms mit drei Schichten 1a, 1b und 1c aus demselben Material M. Eine Indexplatte 11 mit vier Armen 12 ist zwischen zwei Formaufspannplatten und einem Werkzeug um eine Achse A drehbar. In den vier Stationen werden nacheinander Kavitäten ausgebildet, die für die Ausbildung bzw. Abformung der jeweiligen Schicht gestaltet ist. In der Station I wird auf dem Arm die innerste Schicht hergestellt, d.h. die erste Lage an PET-Material wird auf diesen Arm bzw. Kern aufgespritzt. In der Station II wird die erste Schicht mit der zweiten Lage bzw. zweiten Schicht an PET-Material überzogen und in der Station III kommt die dritte Schicht an PET-Material hinzu. In der Station IV kann der fertige dickwandige Preform auskühlen und im nächsten Takt entnommen werden. Die Schichtdicken in den einzelnen Stationen unterscheiden sich nur geringfügig und zwar derart, dass unter Berücksichtigung der Abkühlraten in jeder der Stationen I, II und III im Wesentlichen die gleiche Zeit für die Herstellung und Ausformung der jeweiligen Schicht gegeben ist. Am Ende des Herstellungsprozesses liegt somit ein dickwandiger PET-Preform aus ein- und demselben Material vor (sogenannter 1-Phasen-Preform), der aus mehreren Schichten 1a, 1b, und 1c zusammengesetzt ist, analog der Darstellung in der Figur 2, wobei sich die Schichtdicken d1, d2 und d3 der einzelnen Schichten 1a, 1b und 1c lediglich unter Berücksichtigung der Abkühlrate der jeweiligen Schicht geringfügig voneinander unterscheiden, und zwar derart, dass für jede der Schichten 1a, 1b und 1c eine im wesentlichen gleiche Zykluszeit für deren Herstellung bzw. Ausformung gegeben ist. Für die einzelnen Schichten 1a, 1b, 1c,... können auch unterschiedliche Materialien vorgesehen werden. Figur 6 zeigt schematisch die Herstellung eines dickwandigen Preforms aus drei Schichten 1a, 1b und 1c, wobei für die zwischen den beiden Schichten 1a und 1c aus PET-Material eine Schicht 1b aus einem Material mit BarriereEigenschaften eingebettet ist. Für die einzelnen Schichtdicken d1, d2 und d3 gilt das Gleiche wie im Falle der Verwendung von gleichem Material, wobei jedoch die Abkühlrate des Kunststoffmaterials mit den Barriereeigenschaften berücksichtigt werden muss. Jedenfalls gilt auch im vorliegenden Fall, dass sich die Schichtdicken d1, d2 und d3 der einzelnen Schichten 1a, 1b und 1c lediglich unter Berücksichtigung der Abkühlrate der jeweiligen Schicht geringfügig voneinander unterscheiden, und zwar derart, dass für jede der Schichten 1a, 1b und 1c eine im wesentlichen gleiche Zykluszeit für deren Herstellung bzw. Ausformung gegeben ist

Während in den vorliegenden Ausführungsbeispielen der dickwandige Preform in drei Schichten aufgeteilt worden ist, kann auch eine Aufteilung in zwei oder in mehr als drei Schichten vorgenommen werden. Wesentlich ist nur, dass die Schichtdicken der einzelnen Schichten derart aufeinander abgestimmt sind, dass in jeder Station im Wesentlichen die gleiche Zykluszeit vorliegt. Anders ausgedrückt soll für jede der Schichten im Wesentlichen die gleiche Zeit für deren Herstellung bzw. Ausformung gegeben sein. Die Zykluszeit wird - abgesehen von der Zeit für das Einspritzen der Schmelze - im wesentlichen durch die Kühlzeit tKühl bestimmt, die für die jeweilige Schicht benötigt wird, bis das Werkzeug aufgefahren und weitergetaktet werden kann. In die Kühlzeit geht die Wandstärke, vorliegend also die Schichtdicke, quadratisch ein. Für flächige Artikel gilt folgende Beziehung: 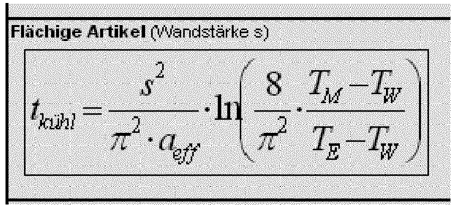
- s: = Wandstärke [mm]
- a_{eff}: = effektiver Wärmeübergang [mm²/s]
- T_{M}: = Massetemperatur [°C]
- T_{W}: = Werkzeugwandtemperatur [°C]
- T_{E}: = Entformungstemperatur [°C]

Abschließend ist festzuhalten, für die Anzahl der Schichten eine auf die jeweiligen Gegebenheiten angepasste, grundsätzlich nicht nach oben begrenzte Anzahl n an Schichten vorgesehen werden kann. Für die Herstellung mittels der o.g. Drehteller- oder Indexplattentechnik ist eine entsprechende Anzahl n+x vorzusehen, wobei x die Anzahl derjenigen Stationen sein soll, die für die Kühlung der fertigen Preforms vorgesehen sind. Bei den oben beschriebenen Ausführungsformen waren n = 3 und x = 1.

Die Erfindung ist schließlich nicht auf die Verwendung bestimmter Materialien beschränkt. Der Kunststoff-Vorformling (Preform) kann aus den unterschiedlichsten Materialien und Materialkombinationen aufgebaut sein. Insbesondere können eine oder mehrere Barriereschichten vorgesehen werden. Beispielsweise könnte ein fertiger Preform aus folgenden Materialien aufgebaut sein (Reihenfolge von innen nach außen): PET, PA, EVOA, PET,...Darüber hinaus kann auch Recyclat beliebiger bzw. für den jeweiligen Verwendungszweck geeigneter Materialien vorgesehen werden. Es ist lediglich darauf zu achten, dass für die einzelnen Schichtdicken eine im Wesentlichen gleiche Zeit für deren Herstellung bzw. Ausformung vorliegt, so dass mittels der Mehrkomponenten-Spritzgießtechnik die einzelnen Schichten simultan hergestellt werden können und für jeden Takt im Wesentlichen die gleiche Zeit benötigt wird und in keiner der Stationen eine unnötige "Wartezeit" vorliegt, die sich negativ auf die gesamte Zykluszeit auswirkt.

### Bezugszeichenliste

- 1: Preform
- 1a: Innerste Schicht
- 1b: Mittlere Schicht
- 1c: Äußere Schicht
- 2: Feststehende Formaufspannplatte
- 3: Bewegliche Formaufspannplatte
- 4: Drehteller
- 5: Formwerkzeug
- 5a: Bewegliche Formhälfte
- 5b: Feststehende Formhälfte
- 6a - 6d: Kerne
- 7a - 7c: Vertiefungen
- 8: Kühlstation
- 9: Plastifizier- und Einspritzeinrichtung
- 10: Schmelzeverteiler
- 11: Indexplatte
- 12: Arm bzw. Kern

## Patentansprüche

1. Verfahren zur Herstellung eines Kunststoff-Vorformlings (Preform) (1) eines aufblasbaren großvolumigen Behälters, wobei der Kunststoff-Vorformling einen Verschluss-Bereich und einen aufblasbaren Hohlkörper-Bereich aufweist, wobei wenigstens der aufblasbare Hohlkörper-Bereich des Kunststoff-Vorformlings (1) aus mehreren Schichten (1a, 1b, 1c,...) zusammengesetzt ist, wobei Kunststoffmaterial M aufgeschmolzen und in eine Formwerkzeug (5, 5a, 5b) eingespritzt wird, wobei wenigstens für den Hohlkörper-Bereich des Kunststoff-Vorformlings (1) nacheinander mehrere Kavitäten zur Herstellung von einzelnen Schichten gebildet werden, wobei in jeder Kavität eine Schicht gebildet wird, wobei zunächst eine erste Kavität für die Herstellung einer ersten Schicht (1a) gebildet wird, die die innerste Schicht des Kunststoff-Vorformlings bildet, wobei die so gebildete Kavität mit dem aufgeschmolzenen Kunststoffmaterial (M) gefüllt und die erste, innere Schicht (1a) gebildet wird, wobei nachfolgend für jede weitere Schicht (1b, 1c,...) jeweils eine weitere Kavität passender Größe gebildet und mit Kunststoffmaterial (M) gefüllt wird, wobei jede weitere Schicht (1b, 1c,...) an die in einem vorangegangen Schritt gebildete Schicht angeformt wird, und wobei in jedem Schritt Schichten mit einer Schichtdicke (d1, d2, d3,...) gebildet werden, die sich lediglich unter Berücksichtigung der Abkühlrate der jeweiligen Schicht (1a, 1b, 1c,...) derart geringfügig voneinander unterscheiden, dass für jede der Schichten eine im Wesentlichen gleiche Zykluszeit für deren Herstellung bzw. Ausformung gegeben ist.

2. Verfahren nach Anspruch 1,
**dadurch gekennzeichnet, dass**
die einzelnen Schichten jeweils eine Schichtdicke von mindestens 2 mm Dicke, vorzugsweise von mindestens 3 mm Dicke, aufweisen.

3. Verfahren nach Anspruch 1 oder 2,
**dadurch gekennzeichnet, dass**
für jede der Schichten (1a, 1b, 1c) das gleiche Kunststoffmaterial M verwendet wird.

4. Verfahren nach Anspruch 1 oder 2,
**dadurch gekennzeichnet, dass**
für die innerste Schicht (1a) ein Neumaterial Mₙ und für die weiteren Schichten (1b, 1c) ein recyceltes Material Mᵣ verwendet wird.

5. Verfahren nach einem der Ansprüche 1 bis 4,
**dadurch gekennzeichnet, dass**
mindestens drei Schichten (1a, 1b, 1c) hergestellt werden.

6. Verfahren nach einem der Ansprüche 1 bis 5,
**dadurch gekennzeichnet, dass**
für jede Schicht (1a, 1b, 1c) soviel Kunststoffmaterial M aufgeschmolzen wird, dass jede Schicht (1a, 1b, 1c) eine Masse von mindestens 75g, vorzugsweise von mindestens 100g, aufweist.

7. Verfahren nach einem der vorstehenden Ansprüche,
**dadurch gekennzeichnet, dass**
sich die einzelnen Schichtdicken (d1, d2, d3,..) unter Berücksichtigung der Abkühlraten und der Wärmeleitfähigkeit der verwendeten Kunststoffmaterialien M geringfügig voneinander unterscheiden, insbesondere um nicht mehr als 20%, vorzugsweise nicht mehr als 10%, wobei für die von innen nach außen aufeinander folgenden einzelnen Schichten hinsichtlich deren Schichtdicken d₁, d₂, d₃, d₄ und so fort die folgende Beziehung gelten soll: d₁ > d₂ ≥ d₃ ≥ d₄ ....

8. Verfahren nach einem der vorstehenden Ansprüche,
**dadurch gekennzeichnet, dass**
der Kunststoff-Vorformling (1) eine Masse von mindestens 300g hat.

9. Verfahren nach einem der vorstehenden Ansprüche,
**dadurch gekennzeichnet, dass**
es sich um einen Kunststoff-Vorformling (1) eines 1-, 3-, oder 5- Gallonen-Wasserbehälter oder eines noch großvolumigeren Wasserbehälters handelt.

10. Spritzgießmaschine zur Durchführung des Verfahrens nach einem der Ansprüche 1 bis 9, mit wenigstens einer Plastifizier- und Einspritzeinheit (9), mit einer mit Drehteller (4) oder mit Indexplatte ausgestatteten Schließeinheit, wobei Teile eines Formwerkzeugs (5) dem Drehteller (4) oder der Indexplatte zugeordnet sind, wobei diese Teile (5a) mit weiteren Teilen (5b) des Formwerkzeugs (5) zusammengebracht und Kavitäten unterschiedlicher Gestalt und Größe gebildet werden können, wobei mit dem Drehteller (4) oder mit der Indexplatte mehrere Stationen (I, II, III, IV) angefahren werden können, wobei in verschiedenen Stationen (I, II, III) Kavitäten unterschiedlicher Gestalt und Größe entsprechend der jeweils herzustellenden Schicht (1a, 1b, 1c) des Kunststoff-Vorformlings gebildet werden können, wobei diese Kavitäten mit der unterschiedlichen Gestalt und Größe zur Formung von unterschiedlichen Schichten (1a, 1b, 1c) des Kunststoff-Vorformlings (1) von geringfügig unterschiedlicher Schichtdicke (d1, d2, d3) ausgebildet sind, wobei in jeder Kavität Schichten mit einer Schichtdicke (d1, d2, d3,...) gebildet werden können, die sich lediglich unter Berücksichtigung der Abkühlrate der jeweiligen Schicht (1a, 1b, 1c,...) derart geringfügig voneinander unterscheiden, dass für jede der Schichten eine im wesentlichen gleiche Zykluszeit für deren Herstellung bzw. Ausformung gegeben ist, und wobei eine Plastifizier- und Einspritzeinheit (9) zur gleichzeitigen Befüllung von mindestens zwei, vorzugsweise mindestens drei Kavitäten mit jeweils unterschiedlicher Gestalt und Größe vorgesehen ist, und wobei ein Schmelzeverteilersystem (10) zwischen dieser Plastifizier- und Einspritzeinheit (9) und den vorgenannten Kavitäten vorgesehen ist

11. Spritzgießmaschine nach Anspruch 10,
**dadurch gekennzeichnet, dass**
eine weitere Plastifizier- und Einspritzeinheit zur Herstellung von einer oder mehreren Schichten des Kunststoff-Vorformlings vorgesehen ist, insbesondere zur Herstellung der innersten Schicht (1a).

## Claims

1. A process for producing a plastic parison (preform) (1) of an inflatable large-volume container, wherein the plastic parison has a closure region and an inflatable hollow body region, wherein at least the inflatable hollow body region of the plastic parison (1) is composed of several layers (1a, 1b, 1c,...), wherein plastic material M is melted and injected into a moulding tool (5, 5a, 5b), wherein at least for the hollow body region of the plastic parison (1) several cavities are formed in succession for the production of individual layers, wherein in each cavity a layer is formed, wherein firstly a first cavity is formed for the production of a first layer (1a) which forms the innermost layer of the plastic parison, wherein the thus formed cavity is filled with the melted plastic material (M) and the first, inner layer (1a) is formed, wherein subsequently for each further layer (1b, 1c,...) respectively a further cavity of suitable size is formed and is filled with plastic material (M), wherein each further layer (1b, 1c,...) is formed onto the layer formed in a preceding step, and wherein in each step layers with a layer thickness (d1, d2, d3,...) are formed, which only slightly differ from one another taking into consideration the cooling rate of the respective layer (1a, 1b, 1c...) in such a way that for each of the layers a substantially identical cycle time is provided for their production or respectively moulding.

2. The process according to Claim 1,
**characterized in that**
the individual layers have respectively a layer thickness of at least 2 mm thickness, preferably of at least 3 mm thickness.

3. The process according to Claim 1 or 2,
**characterized in that**
for each of the layers (1a, 1b, 1c) the same plastic material M is used.

4. The process according to Claim 1 or 2,
**characterized in that**
for the innermost layer (1a) a new material Mₙ is used, and a recycled material Mᵣ is used for the further layers (1b, 1c).

5. The process according to one of Claims 1 to 4,
**characterized in that**
at least three layers (1a, 1b, 1c) are produced.

6. The process according to one of Claims 1 to 5,
**characterized in that**
for each layer (1a, 1b, 1c) so much plastic material M is melted that each layer (1a, 1b, 1c) has a mass of at least 75g, preferably of at least 100g.

7. The process according to one of the preceding claims,
**characterized in that**
the individual layer thicknesses (d1, d2, d3,...) differ slightly from one another taking into consideration the cooling rates and the thermal conductivity of the plastic materials M which are used, in particular by not more than 20%, preferably not more than 10%, wherein for the individual layers, following one another from the inside outwards, with regard to their layer thicknesses d₁, d₂, d₃, d₄ and so on the following relationship is to apply: d₁ > d₂ ≥ d₃ ≥ d₄ ...

8. The process according to one of the preceding claims,
**characterized in that**
the plastic parison (1) has a mass of at least 300g.

9. The process according to one of the preceding claims,
**characterized in that**
it concerns a plastic parison (1) of a 1-, 3-, or 5-gallon water container or of a water container having an even greater volume.

10. An injection moulding machine for carrying out the process according to one of Claims 1 to 9, with at last one plasticizing- and injection unit (9), with a clamping unit equipped with a rotary table (4) or with an index plate, wherein parts of a moulding tool (5) are associated with the rotary table (4) or with the index plate, wherein these parts (5a) are brought together with further parts (5b) of the moulding tool (5) and cavities of different shape and size can be formed, wherein with the rotary table (4) or with the index plate several stations (I, II, III, IV) can be approached, wherein in various stations (I, II, III) cavities of different shape and size can be formed according to the layer (1a, 1b, 1c), respectively to be produced, of the plastic parison, wherein these cavities with the different shape and size are configured for the forming of different layers (1a, 1b, 1c) of the plastic parison (1) of slightly different layer thickness (d1, d2, d3), wherein in each cavity layers with a layer thickness (d1, d2, d3,...) can be formed, which only differ slightly from one another, taking into consideration the cooling rate of the respective layer (1a, 1b, 1c, ...) in such a way that for each of the layers a substantially identical cycle time is provided for their production or respectively moulding, and wherein a plasticizing- and injection unit (9) is provided for the simultaneous filling of at least two, preferably at least three cavities with respectively different shape and size, and wherein a melt distributor system (10) is provided between this plasticizing- and injection unit (9) and the aforementioned cavities.

11. The injection moulding machine according to Claim 10,
**characterized in that**
a further plasticizing- and injection unit is provided for the production of one or more layers of the plastic parison, in particular for the production of the innermost layer (1a).

## Revendications

1. Procédé pour la fabrication d'ébauches en matière plastique (flanc) (1) d'un conteneur de grand volume gonflable, dans lequel l'ébauche en matière plastique présente une partie de fermeture et une partie de corps creux gonflable, dans lequel au moins la partie de corps creux gonflable de l'ébauche en matière plastique (1) est composée de plusieurs couches (1a, 1b, 1c, ...), dans lequel de la matière plastique (M) est fondue et injectée dans un outil de moulage (5, 5a, 5b), dans lequel au moins pour la partie de corps creux de l'ébauche en matière plastique (1), plusieurs cavités consécutives pour créer différentes couches sont formées, dans lequel une couche est formée dans chaque cavité, dans lequel une première cavité est d'abord formée pour créer une première couche (1a) qui forme la couche la plus intérieure de l'ébauche en matière plastique, dans lequel la cavité ainsi formée est remplie avec la matière plastique (M) fondue et la première couche intérieure (1a) est formée, dans lequel ensuite, pour chaque couche supplémentaire (1b, 1c, ...) respectivement une autre cavité de taille adaptée est formée et remplie de matière plastique (M), dans lequel chaque couche supplémentaire (1b, 1c, ...) est formée sur la couche formée au cours d'une étape précédente, et dans lequel à chaque étape, des couches avec une épaisseur de couche (d1, d2, d3, ...) sont formées qui se distinguent légèrement entre elles uniquement en tenant compte de la vitesse de refroidissement de la couche (1a, 1b, 1c, ...) respective de telle façon que pour chacune des couches, il y a essentiellement une même durée de cycle pour sa fabrication, respectivement formation.

2. Procédé selon la revendication 1, **caractérisé en ce que** les différentes couches présentent respectivement une épaisseur de couche d'au moins 2 mm d'épaisseur, de préférence d'au moins 3 mm d'épaisseur.

3. Procédé selon la revendication 1 ou 2, **caractérisé en ce que** pour chacune des couches (1a, 1b, 1c), la même matière plastique (M) est employée.

4. Procédé selon la revendication 1 ou 2, **caractérisé en ce que** pour la couche la plus intérieure (la), une nouvelle matière Mₙ est employée et pour les autres couches (1b, 1c), une matière Mᵣ recyclée est employée.

5. Procédé selon l'une des revendications 1 à 4, **caractérisé en ce qu'**au moins trois couches (1a, 1b, 1c) sont fabriquées.

6. Procédé selon l'une des revendications 1 à 5, **caractérisé en ce que** pour chaque couche (1a, 1b, 1c) autant de matière plastique (M) est fondue, que chaque couche (1a, 1b, 1c) présente une masse d'au moins 75g, de préférence d'au moins 100g.

7. Procédé selon l'une des revendications précédentes, **caractérisé en ce que** les différentes couches (d1, d2, d3, ...) se distinguent légèrement entre elles uniquement en tenant compte des vitesses de refroidissement et de la conductivité thermique des matières plastiques M employées, en particulier de pas plus de 20 %, de préférence de pas plus de 10 %, dans lequel pour les différentes couches consécutives de l'intérieur vers l'extérieur, en regard de leurs épaisseurs de couche d₁, d₂, d₃, d₄ et ainsi de suite, vaut la relation suivante : d₁>d₂≥d₃≥d₄...

8. Procédé selon l'une des revendications précédentes, **caractérisé en ce que** l'ébauche en matière plastique (1) a une masse d'au moins 300g.

9. Procédé selon l'une des revendications précédentes, **caractérisé en ce que** l'ébauche en matière plastique (1) est un conteneur d'eau de 1, 3 ou 5 gallons ou un conteneur d'eau de plus gros volume.

10. Machine de moulage par injection pour exécuter le procédé selon l'une des revendications 1 à 9, comprenant au moins une unité de plastification et d'injection (9), comprenant une unité de fermeture avec plateau tournant (4) ou plateau d'indexation, dans laquelle des parties d'un outil de moulage (5) sont attribuées au plateau tournant (4) ou au plateau d'indexation, dans laquelle ces parties (5a) sont regroupées avec d'autres parties (5b) de l'outil de moulage (5) et peuvent former des cavités de forme et taille différentes, dans laquelle plusieurs postes (I, II, III, IV) peuvent être démarrés avec le plateau tournant (4) ou le plateau d'indexation, dans laquelle dans différents postes (I, II, III), des cavités de forme et taille différentes peuvent être formées en fonction de la couche (1a, 1b, le) à fabriquer respectivement de l'ébauche de matière plastique, dans laquelle ces cavités avec la différente forme et taille sont conçues pour former différentes couches (1a, 1b, 1c) de l'ébauche de matière plastique (1) d'épaisseur de couche (d1, d2, d3) légèrement différente, dans laquelle dans chaque cavité, des couches avec une épaisseur de couche (d1, d2, d3) peuvent être formées qui se distinguent légèrement entre elles uniquement en tenant compte de la vitesse de refroidissement de la couche (1a, 1b, le) respective de telle façon que pour chacune des couches, il y a essentiellement une même durée de cycle pour sa fabrication, respectivement sa formation, et dans laquelle une unité de plastification et d'injection (9) est prévue pour le remplissage simultané d'au moins deux, en particulier au moins trois cavités respectivement de forme et de taille différentes, et dans laquelle un système de distribution de masse fondue (10) est prévu entre cette unité de plastification et d'injection (9) et les cavités mentionnées ci-avant.

11. Machine de moulage par injection selon la revendication 10, **caractérisée en ce qu'**une unité de plastification et d'injection supplémentaire pour fabriquer une ou plusieurs couche(s) de l'ébauche de matière plastique est prévue, en particulier pour fabriquer la couche la plus intérieure (1a).
